# EUROPEAN PATENT SPECIFICATION

(11) **EP 3 446 813 B1**
(45) Date of publication and mention of the grant of the patent: **04.08.2021**
(21) Application number: 18190435.0
(22) Date of filing: 23.08.2018
(51) Int. Cl.: B22F 3/105, B33Y 10/00, B33Y 70/00, C22C 1/02, C22C 1/04, C22C 21/00, B22F 10/00, B22F 10/20, C22C 32/00

(54) **METHOD OF TAILORING HIGH STRENGTH ALUMINUM ALLOYS FOR ADDITIVE MANUFACTURING THROUGH THE USE OF GRAIN REFINERS**
VERFAHREN ZUR MASSSCHNEIDERUNG VON HOCHFESTEN ALUMINIUMLEGIERUNGEN FÜR DIE GENERATIVE FERTIGUNG DURCH DIE VERWENDUNG VON KORNVERFEINERERN
MÉTHODE DE PERSONNALISATION D'ALLIAGES D'ALUMINIUM À HAUTE RÉSISTANCE POUR FABRICATION ADDITIVE GRÂCE À L'UTILISATION DE PRODUITS D'AFFINAGE DU GRAIN

(30) Priority: 25.08.2017 US 201715687330
(43) Date of publication of application: 27.02.2019
(73) Proprietor: The Boeing Company, Chicago, IL 60606-2016 (US)
(72) Inventor: WILSON, Paul N, Chicago, IL Illinois 60606-2016 (US); BOCCHINI, Peter J, Chicago, IL Illinois 60606-2016 (US)
(74) Representative: Boult Wade Tennant LLP

(56) References cited:
- EP-A1- 0 553 533
- WO-A1-2016/145382
- WO-A1-2016/145397
- GU DONGDONG ET AL: "Selective Laser Melting Additive Manufacturing of TiC/AlSi10Mg Bulk-form Nanocomposites with Tailored Microstructures and Properties", PHYSICS PROCEDIA, ELSEVIER, AMSTERDAM, NL, vol. 56, 9 September 2014 (2014-09-09), pages 108-116, XP029053228, ISSN: 1875-3892, DOI: 10.1016/J.PHPRO.2014.08.153
- LI X P ET AL: "Selective laser melting of nano-TiB2decorated AlSi10Mg alloy with high fracture strength and ductility", ACTA MATERIALIA, ELSEVIER, OXFORD, GB, vol. 129, 23 February 2017 (2017-02-23), pages 183-193, XP029964592, ISSN: 1359-6454, DOI: 10.1016/J.ACTAMAT.2017.02.062
- MENGXING CHEN ET AL: "Novel Composite Powders with Uniform TiB2 Nano-Particle Distribution for 3D Printing", APPLIED SCIENCES, vol. 7, no. 3, 6 March 2017 (2017-03-06), page 250, XP055525213, CH ISSN: 2076-3417, DOI: 10.3390/app7030250
- B. S. MURTY ET AL: "Grain refinement of aluminium and its alloys by heterogeneous nucleation and alloying", INTERNATIONAL MATERIALS REVIEWS, vol. 47, no. 1, 1 February 2002 (2002-02-01), pages 3-29, XP055086865, ISSN: 0950-6608, DOI: 10.1179/095066001225001049

## Description

### Technical Field

The present disclosure relates generally to the production of metallic materials and, more particularly, to the production of high strength metallic alloys, such as aluminum alloys, by the addition of grain refiners to a metal alloy for grain refinement and crack suppression during additive manufacturing.

### Background

Additive manufacturing is utilized to fabricate 3-dimensional (3D) parts or products by adding layer-upon-layer of material. Additive manufacturing systems utilize 3D-modeling (Computer-Aided Design or CAD) software, computer-controlled additive-manufacturing equipment, and raw materials (feed stocks) in powder, wire or liquid form. Additive manufacturing encompasses a wide variety of technologies and incorporates a wide variety of techniques, such as, for example, laser freeform manufacturing (LFM), laser deposition (LD), direct metal deposition (DMD), laser metal deposition, laser additive manufacturing, laser engineered net shaping (LENS), stereolithography (SLA), selective laser sintering (SLS), fused deposition modeling (FDM), multi-jet modeling (MJM), 3D printing, rapid prototyping, direct digital manufacturing, layered manufacturing, and additive fabrication. Moreover, a variety of raw materials may be used in additive manufacturing to create products. Examples of such materials include plastics, metals, concrete, and glass.

One example of an additive-manufacturing system is a laser additive-manufacturing system. Laser additive manufacturing includes spraying or otherwise injecting a powder or a liquid into a focused beam of a high-power laser or nexus of a plurality of high-powered lasers under controlled atmospheric conditions, thereby creating a weld pool. The resulting deposits may then be used to build or repair articles for a wide variety of applications.

Additive manufacturing is a process reliant on solidification dynamics similarly to welds and castings. However, additive manufacturing of high strength aluminum alloys (e.g., 2000 and 7000 series aluminum alloys) has previously resulted in solidification cracking. For example, due to crack susceptibility during solidification, conventional aluminum alloys for wrought products are unsuitable for the additive manufacturing process, in particular for laser directed energy based processes. Cast aluminum alloy grades fair better, but generally have low strengths and thus are not usable for many applications requiring high strength. For low strength alloys addition of silicon prevents cracking but this is not a suitable approach for aerospace HS aluminum. Accordingly, improved high strength alloys for use in additive manufacturing would be a welcome addition to the art. WO 2016/145382 A1, in accordance with it abstract, states aluminum alloy products having 1-30 vol. % of a ceramic phase. The aluminum alloy products may be produced via additive manufacturing techniques to facilitate production of the aluminum alloy products having the 1-30 vol. % of the ceramic phase. GU DONGDONG ET AL, Physics Procedia, Vol.56, 9 September 2014, p108-116 states, in accordance with its abstract, nanoscale TiC particle reinforced AlSi10Mg nanocomposite parts produced by selective laser melting (SLM) additive manufacturing process. The influence of laser energy density (LED) on densification behavior, microstructural evolution, microhardness and wear properties of SLM-processed TiC/AlSi10Mg nanocomposites was studied. It showed that the near fully dense nanocomposite parts (>98% theoretical density) were achieved with increasing the applied LED. The TiC reinforcement in SLM-processed parts experienced a microstructural change from the standard nanoscale particle morphology (the average size 77-93 nm) to the relatively coarsened submicron structure (the mean particle size 154 nm) as the LED increased. The sufficiently high densification rate combined with the homogeneous distribution of nanoscale TiC reinforcement throughout the matrix led to a high microhardness of 181.2 IIV_{0.2}, a considerably low coefficient of friction (COF) of 0.36, and a reduced wear rate of 2.94X10⁻⁵ mm³N⁻¹m⁻¹ for SLM-processed TiC/AlSi10Mg nanocomposite parts. LI X P ET AL, Acta Materialia, vol.129, 23 February 2017 p183-193 states, in accordance with it abstract, an in-situ nano-TiB₂ decorated A1Si10Mg composite (NTD-Al) powder fabricated by gas-atomisation for selective laser melting (SLM). Fully dense and crack-free NTD-A1 samples were produced using SLM. In contrast to the NTD-A1 powder without cell-like microstructure, the SLMed NTD-AI had a textureless microstructure, consisting of fine grains and cells, with well dispersed nano-TiB₂ particles inside the grains and rod-like nano-Si precipitates inside the cells. Both nano-TiB₂ particles and nano-Si precipitates exhibited a highly coherent interface with the Al matrix, indicative of a strong interfacial bonding. The formation of this microstructure was attributed to the sequential solidification of non-equilibrium and eutectic Al-Si upon rapid cooling during SLM. As a result, the SLMed NTD-AI showed a very high ultimate tensile strength -530 MPa, excellent ductility -15.5% and high microhardness ∼191 HV₀₃, which were higher than most conventionally fabricated wrought and tempered Al alloys, previously SLMed Al-Si alloys and nano-grained 7075 Al. The underlying mechanisms for this strength and ductility enhancement were discussed and a correlation between this novel microstructure and the superior mechanical properties was established. This study provides insights into the fabrication of metal matrix nanocomposites by SLM from in-situ pre-decorated composite powder. MENGXING CHEN ET AL, Applied Sciences, vol.7 no.3, 6 March 2017, p250 states, in accordance with its abstract, that the ductility and strength of a metal matrix composite could be concurrently improved if the reinforcing particles were of the size of nanometers and distributed uniformly. In this paper, it is revealed that gas atomization solidification could effectively disperse TiB₂ nanoparticles in the Al alloy matrix due to its fast cooling rate and the coherent orientation relationship between TiB₂ particles and a-Al. Besides, nano-TiB₂ led to refined equiaxed grain structures. Furthermore, the composite powders with uniformly embedded nano-TiB₂ showed improved laser absorptivity. The composite powders are described as being well suited for selective laser melting. WO 2016/145397 A1 states, in accordance with its abstract, metal powders for use in additive manufacturing, and aluminum alloy products made from such metal powders via additive manufacturing. The composition(s) and/or physical properties of the metal powders may be tailored. In turn, additive manufacturing may be used to produce a tailored aluminum alloy product. EP 0553533 A1, in accordance with its abstract, states a method for grain refining aluminium and aluminium alloys in which a siliconboron alloy containing between 0.01 to 4.0% by weight of boron is added to molten aluminium or aluminium alloy in such an amount that the resulting melt of aluminium or aluminium alloy contains at least 50 ppm boron. Also described is a grain refining alloy for aluminium and aluminium alloys in the form of a siliconboron alloy containing between 0.01 and 4.0% by weight of boron.

### Summary

The invention stated in claim 1 describes herein a method (100) for additive manufacturing a metal alloy, comprising: providing a powder feedstock comprising at least one metal alloy (101) to a powder feed system, wherein the at least one metal alloy is an aluminum alloy; providing a separate powder feedstock comprising at least one grain refiner (103) to a powder feed system, wherein the at least one grain refiner is one or more of TiB₂, TiC, TiAl, AlB₂ and mixtures thereof; combining the feedstocks in pre-set proportions and exposing the feedstocks to an energy source to form a melt pool (105) comprising the at least one metal alloy and the at least one grain refiner; and solidifying at least a portion of the melt pool to form a modified alloy (109) comprising an amount of the at least one grain refiner in the modified alloy in the range of between from 1.5 % to 3.5 % by weight of the modified alloy.

Advantages of the examples will be set forth in part in the description which follows, and in part will be understood from the description, or may be learned by practice of the examples. The advantages will be realized and attained by means of the elements and combinations particularly pointed out in the appended claims.

It is to be understood that both the foregoing general description and the following detailed description are exemplary and explanatory only and are not restrictive of the examples, as claimed.

### Brief Description of the Drawings

The accompanying drawings, which are incorporated in and constitute a part of this specification, illustrate examples of the present teachings and together with the description, serve to explain the principles of the disclosure.
**FIG. 1A** is flow chart representation of a method according to an example in which at least one grain refiner and at least one metal alloy are provided as separate feedstock to an additive manufacturing system for forming a modified alloy.
**FIG. 1B** is flow chart representation of a method according to an example in which at least one grain refiner and at least one metal alloy are provided separately and are mixed together to form a mixed powder feedstock which is provided to an additive manufacturing system for forming a modified alloy.
**FIG. 1C** is flow chart representation of a method according to the present disclosure in which a modified alloy, for example, a modified alloy formed according to the methods depicted in FIGS. 1A or 1B, is provided for use as feedstock for an additive manufacturing system.
**FIG. 2** is a schematic representation of an additive manufacturing system which may be used to perform the methods described by the flow-chart representations of FIGS. 1A-1C.
**FIG. 3A** is a flow diagram of aircraft production and service methodology, according to the present disclosure.
**FIG. 3B** is a block diagram of an aircraft, according to the present disclosure.
**FIG. 3C** is a schematic illustration of an aircraft that includes a structure that may be formed, assembled or joined via an additive manufacturing method or materials (e.g., modified alloys) usable in additive manufacturing as described herein.

### Detailed Description

Reference will now be made in detail to the present examples, examples of which are illustrated in the accompanying drawings. Wherever possible, the same reference numbers will be used throughout the drawings to refer to the same or like parts.

Notwithstanding that the numerical ranges and parameters setting forth the broad scope of the examples are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein. For example, a range of "less than 10" may include any and all sub-ranges between (and including) the minimum value of zero and the maximum value of 10, that is, any and all sub-ranges having a minimum value of equal to or greater than zero and a maximum value of equal to or less than 10, e.g., 1 to 5. In certain cases, the numerical values as stated for the parameter may take on negative values. In this case, the example value of range stated as "less than 10" may assume negative values, e.g. -1, -2, -3, - 10, -20, -30, etc.

The following examples are described for illustrative purposes only with reference to the Figures. Those of skill in the art will appreciate that the following description is exemplary in nature, and that various modifications to the parameters set forth herein could be made without departing from the scope of the present examples. It is intended that the specification and examples be considered as exemplary only. The various examples are not necessarily mutually exclusive, as some examples may be combined with one or more other examples to form new examples. It will be understood that the structures depicted in the figures may include additional features not depicted for simplicity, while depicted structures may be removed or modified.

High strength alloy may be utilized for forming a structural component which may be incorporated in a larger structure such as a land-based vehicle, an aircraft, a space vehicle, or a waterborne vehicle. The high strength alloy may be formed by additive manufacturing. As described above, however, many conventional alloys cannot be used for additive manufacturing processes due to cracking upon solidification. As described herein, addition of intermetallic and/or ceramic particles (e.g., grain refiners) to a metal alloy melt can lead to refinement of the primary solidified grain structure. Thus, the addition of grain refiners to metal alloys allows such alloys having poor solidification characteristics to be adapted for usability in additive manufacturing processes, for example, as used in manufacturing and service methods of manned or unmanned vehicles, including for aircraft.

Generally, aspects of the present disclosure include modification of metal alloys, including conventional or "off-the-shelf' alloy, for use in additive manufacturing. Accordingly, modified alloy compositions (hereafter "modified alloy") may be formed according to various implementations.

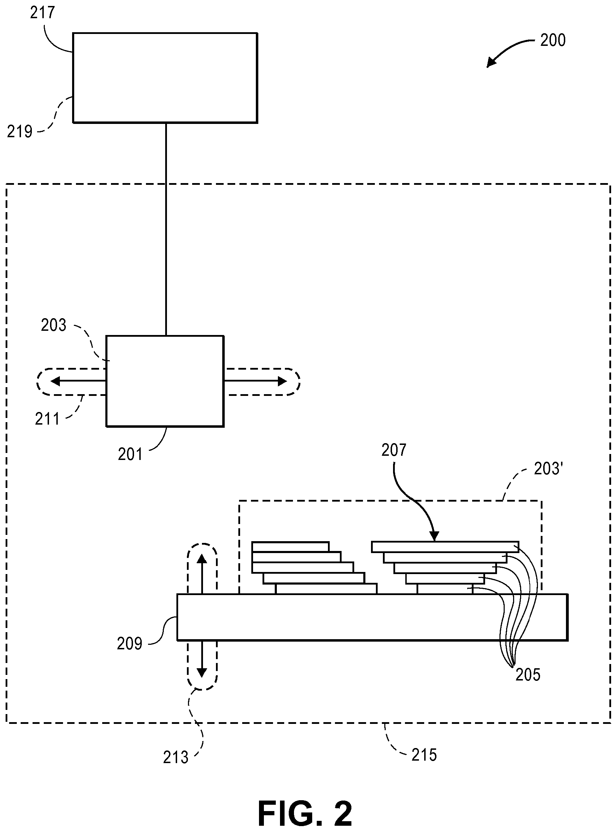

In an implementation, the modification of a metal alloy is performed *in situ* in that a melt pool comprising feedstock raw materials (e.g., at least one metal alloy and at least one grain refiner) is formed contemporaneously with the depositing of at least a portion of the melt pool in a predetermined pattern and the forming of the modified alloy. For example, a modified alloy may be formed via a method executed by an additive manufacturing system such as additive manufacturing system 200 of FIG. 2. Such a method includes providing raw materials (e.g., at least one alloy and at least one grain refiner) as feedstock, forming a melt pool comprising the raw materials, and depositing at least a portion of the melt pool in a predetermined pattern. As the melt pool cools, the resulting modified alloy forms. The resulting modified alloy will contain a smaller grain size than if the conventional feedstock alloy from which it is formed was melted in the absence of the at least one grain refiner, thereby yielding a stronger, solidification cracking-resistant alloy. The modified alloy formed according to methods described herein may itself be used as raw material feedstock in the same or different additive manufacturing system. For example, the modified alloy may be formed as a modified alloy ingot that can be processed into a form usable for additive manufacturing (e.g., it may be gas-atomized to form a modified alloy powder). Alternatively, the modified alloy formed according to such a method may be formed as an article, such as a component of an air, land, sea or space vehicle, or as a weld-like joint between surfaces.

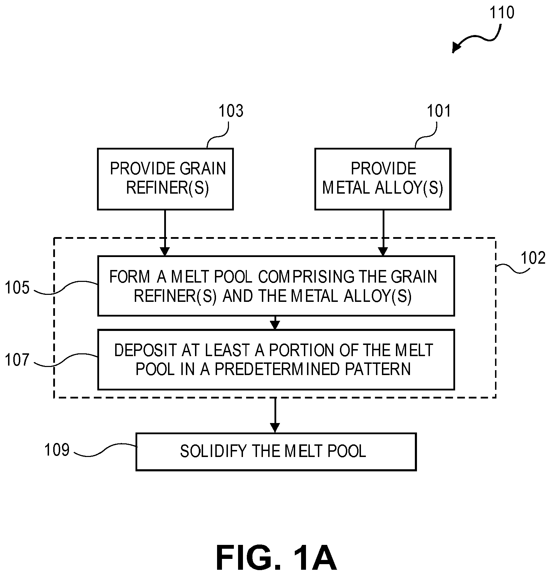

An implementation of a method for the *in situ* modifying of a metal alloy is depicted in the flow-chart 100 of FIG. 1A. As shown in the flow-chart 100, the method includes providing at least one metal alloy at 101; providing at least one grain refiner at 103; forming a melt pool comprising the at least one metal alloy and the at least one grain refiner at 105; depositing at least a portion of the melt pool, for example, in a predetermined pattern at 107; and solidifying the melt pool at 109. Here, the at least one grain refiner provided at 103 and the at least one metal alloy provided at 101 are separately introduced to an additive manufacturing system for processing, such as additive manufacturing system 200 of FIG. 2. The at least one grain refiner and the at least one metal alloy are provided as separate feedstock in the form of a powder. The provision of a wire or liquid is disclosed as a reference example. The additive manufacturing system is configured to combine the grain refiner and the metal alloy in pre-set proportions.

In an implementation, the grain refiner and metal alloy are provided as separate powder feedstocks that are combined by the additive manufacturing system to form a mixed feedstock. In a reference example, the mixed feedstock may comprise less than or equal to about 5% by weight of the grain refiner. In an example of a mixed feedstock, a powder comprising a plurality of particles is provided. The plurality of particles comprise metal alloy particles and grain refiner particles. In a reference example the grain refiner particles comprise up to about 5% by weight of the plurality of particles in the powder. In the present disclosure, other amounts of grain refiner particles in the mixed feedstock include in the range of between from 1.5% to 3.5% of the plurality of particles, including from about 2% to about 3% by weight of the plurality of particles. The additive manufacturing system forms a melt pool comprising the grain refiner and the metal alloy and deposits at least a portion of the melt pool in a predetermined pattern as part of an additive manufacturing process 102. The additive manufacturing system exposes the combined grain refiner and metal alloy feedstocks to an energy source that melts at least the metal alloy to form a metal alloy melt pool comprising the at least one grain refiner and the at least one metal alloy melt pool at 105. In an example, at least some of the grain refiner(s) combined with the metal alloy(s) mix in the metal alloy melt at 105. The melt pool is then deposited in a predetermined pattern at 107 via, for example, additive manufacturing. In an example, the additive manufacturing system deposits the melt pool in a predetermined pattern, layer-by-layer, to form a 3-Dimensional (3D) article, between surfaces to form a weld-like joint, or as an ingot. As the deposited melt pool cools, it solidifies, for example, by eutectic or peritectic reaction at the interface between the mixed grain refiner constituent elements and metal alloy melt, forming a modified alloy. In a reference example, the resulting modified alloy comprises grain refiners in an amount of equal to or less than 5% by weight of the modified alloy.

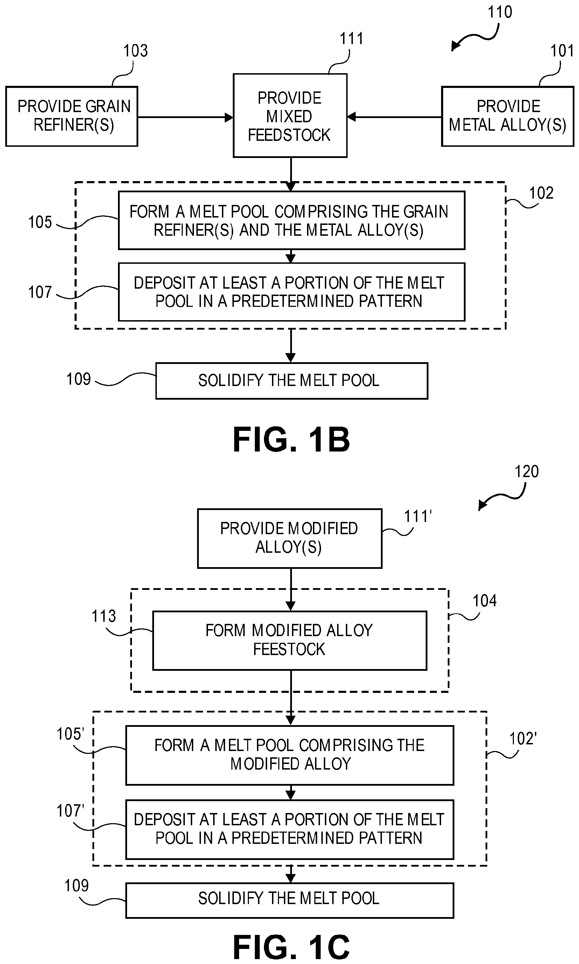

While the method of flow-chart 100 shows that the at least one grain refiner and the at least one metal alloy are separately provided to an additive manufacturing system, for example, as separate feedstocks, other implementations of a reference example are not so limited. For example, a method for *in situ* modifying a metal alloy depicted in the flow-chart 110 of FIG. 1B includes providing at least one metal alloy at 101; providing at least one grain refiner at 103; providing a mixed feedstock at 111; forming a melt pool comprising the at least one metal alloy and the at least one grain refiner at 105; depositing at least a portion of the melt pool, for example, in a predetermined pattern at 107; and solidifying the melt pool at 109. Here, the mixed feed stock is formed by combining the at least one metal alloy provided at 101 and the at least one grain refiner provided at 103. The combining may comprise a physical mixing of the powders, or the forming of a pre-alloy powder which does not fall under the scope of the invention stated in claim 1. In an example, the at least one grain refiner in powder form is be mixed with the at least one metal alloy in powder form. In a reference example, the at least one grain refiner in powder form is combined with an ingot comprising the at least one metal alloy and they may be ground together. The mixed feed stock is introduced to an additive manufacturing system for processing. The at least one grain refiner, the at least one metal alloy or both may be provided in the form of a powder (the invention stated in claim1), wire, or liquid (reference examples). Accordingly, in a reference example the grain refiners and the metal alloys may be provided to an additive manufacturing system as a premixed feedstock.

In an implementation, the grain refiners and metal alloys are available as separate powder feedstocks that are combined into a mixed feedstock prior to being introduced to an additive manufacturing system. The mixed feedstock may, therefore, be a powder for use in additive manufacturing comprising a plurality of particles. The plurality of particles comprises metal alloy particles comprising at least one metal alloy and grain refiner particles comprising at least one grain refiner. In a reference example, the plurality of particles may comprise less than or equal to about 5% by weight of the grain refiner particles. The additive manufacturing system forms a melt pool comprising the grain refiner and the metal alloy contemporaneously with depositing at least a portion of the melt pool in a predetermined pattern and the forming of the modified alloy as part of an additive manufacturing process 102 as described above. A modified alloy comprising grain refiners, for example, in an amount of equal to or less than 5% by weight of the modified alloy (reference example), may be formed *in situ* via the additive manufacturing process 102 as described above.

As described above, many conventional alloys are not available for use in additive manufacturing due to, among other reasons, cracking susceptibility. Accordingly, the methods described herein may be used for forming a modified alloy that is usable in additive manufacturing applications. For example, a modified alloy comprising grain refiners may be used as the raw material feedstock for forming 3D articles or weld-like joints between surfaces via additive manufacturing. In an implementation, the modified alloy formed according to the methods depicted in flow-charts 100 and 110 of FIGS. 1A and 1B, respectively, may itself be used as a modified alloy feedstock for an additive manufacturing process. In such a method for additive manufacturing using a modified alloy as feedstock, as illustrated in the flow-chart 120 of FIG. 1C, at least one modified alloy is provided at 111', wherein the at least one modified alloy comprises at least one metal alloy matrix and at least one grain refiner. The method continues by optionally forming a modified alloy feedstock at 113, forming a melt pool comprising the at least one modified alloy at 105', depositing at least a portion of the melt pool, for example, in a predetermined pattern at 107', and solidifying the melt pool at 109'.

In a reference example, the modified alloy provided at 111' is provided as an ingot of the material; i.e., a modified alloy ingot. The modified alloy ingot may be subject to an optional processing at 104 in an appropriate system to form the modified alloy feedstock at 113 prior to being introduced to an additive manufacturing system. For example, an ingot comprising the modified alloy provided at 111' may be subject to processing by a gas atomizer into the form of a powder. However, an additive manufacturing system may require
the feedstock to be processed into another form appropriate to the needs of the additive manufacturing system of choice.

Similar to the methods depicted in flow-charts 100 and 110 of FIGS. 1A and 1B, respectively, an additive manufacturing system that executes the method depicted in flow-chart 120 exposes the feedstock material-here the modified alloy-to an energy source that melts the feedstock (modified alloy) to form the melt pool comprising the modified alloy at 105'. The grain refiners present in the modified alloy are mixed in the modified alloy melt. The melt pool is then deposited in a predetermined pattern at 107' via the additive manufacturing process 102'. As the deposited melt cools, it re-solidifies into a second modified alloy at 109'. The second modified alloy formed at 109' may or may not have the same microstructure as that of the modified alloy provided as feedstock at 111'. In an example, the as-deposited modified alloy at 107' may solidify into a second modified alloy that has a different microstructure than that of the modified alloy provided as feedstock at 111', but may be exposed to post-process heat treatment(s) in order to modify the alloy to have a substantially similar microstructure than that of the feedstock modified alloy. In an implementation, the cooling rate at which the as-deposited melt pool formed at 107' is exposed to in order to solidify as the second modified alloy may be the same or different than the cooling rate at which the modified alloy provided at 111' was solidified. In a reference example, additional grain refiner(s) may be added to the modified alloy feedstock. For example, the modified alloy feedstock may be processed into a powder to which additional grain refiner(s) in powder form (e.g., grain refiner particles) are added.

Additive manufacturing may be performed by powder bed, powder fed, wire fed, and binder jet systems. The invention stated in claim 1 is limited to a powder feed system. Additive manufacturing methods may include laser freeform manufacturing (LFM), directed energy deposition, laser cladding, laser deposition (LD), direct metal deposition (DMD), laser metal deposition (LMD) including laser melting deposition-powder (LMD-p) and laser melting deposition-wire (LMD-w), laser additive manufacturing, laser engineered net shaping (LENS), stereolithography (SLA), selective laser sintering (SLS), selective layer melting (SLM), fused deposition modeling (FDM), electron beam melting (EBM), Laser Powder Bed Fusion (L-PBF), and binder jet printing.

Turning now to FIG. 2, illustrative, a non-exclusive example of an additive manufacturing system 200 is schematically presented, with the system 200 optionally being configured to perform and/or facilitate methods 100, 110, 120 according to the present disclosure. System 200 generally comprises an additive manufacturing machine with a deposition device 201. The deposition device 201 optionally includes a stock material supply 203 (e.g., such as for a powder feed or a wire feed system). A stock material supply 203 provides raw material (e.g., the at least one metal alloy and the at least one grain refiner) to an additive-manufacturing head of the deposition device. For example, he material is ejected from one or more material outputs provided in the additive-manufacturing head. The one or more material outputs may comprise a variety of configurations such as, for example, apertures, nozzles, etc. The one or more material outputs of the manufacturing head may be comprised of an aperture aligned with the nexus or convergence of the one or more of laser outputs. The base tray 209 may optionally carry a stock material supply 203' (e.g., such as for a powder bed system).

In one implementation, the forming of the melt pool according to the methods described herein comprises exposing at least a portion of the metal alloy to a beam of focused energy. Examples of focused energy include electron beam, laser beam, and thermal radiation. For example, a laser source generates a laser beam and transmits it to one or more laser outputs of an additive-manufacturing head for emission. The laser beam, emitted from the one or more laser outputs, is concentrated into a nexus or convergence. Accordingly, the deposition device 201 may include an energy source (not shown) for emitting to the feedstock provided by the material supply. In an example, the deposition device 201 provides a focused beam of energy from the energy source to form a melt pool from the feedstock provided by the material supply 203, 203'. In an implementation, raw material is released from the one or more material outputs described above and enters the nexus or convergence of the one or more laser outputs, where at least a portion of material is melted to form a melt pool.

The melt pool is deposited layer-by-layer. That is, deposited layers 205 are formed on base tray 209. The deposited layers 205 are deposited in a pre-determined pattern and cool as a modified-alloy in the form of an article 207. In other words, as the additive-manufacturing head advances relative to the product being formed, the melted material of the melt pool begins to cool and harden (i.e., solidify) once the material is out of the weld pool, for example, upon being deposited onto a substrate or onto layers of previously deposited melt pool material.

To assist forming layers 205 on the base tray 209, the deposition device 201 may translate along a lateral stage 211, and the base tray 209 may translate along an axial, or vertical, stage 213. The system 200 optionally comprises a fabrication chamber 215 which encloses the deposition device 201, the base tray 209, and the layers 205 as formed.

The deposition device 201 may be configured to move away from the base tray 209 and the in-process part 207, leaving a clear path for non-contact. Additionally or alternatively, the deposition device 201 may afford a clear path to a portion of the in-process article 207 and may move relative to the in-process article 207 to sequentially expose all portions of the in-process article 207. The whole additive manufacturing system 200 is controlled by a controller 217, which is optionally a computer 219. The controller 217 coordinates the operation of the deposition device 201, and may be programmed to perform any of the manufacturing methods 100, 110, 120 previously described.

Additive manufacturing devices may be available or modifiable to accomplish grain refinement in the same chamber as additive manufacturing. Grain refinement may occur while adding grain refiners to a melt pool of the metal alloy matrix. Some additive manufacturing processes involve melting feed stock to add material. Melting may include exposure to electron beam, plasma, electric arc, laser energy, touch flame, etc.

The type and chemistry of the at least one metal alloy may vary. For example, the composition of the metal alloy may include mixtures of microcrystalline elemental and/or prealloyed and/or partially alloyed powder that may be commercially available. Reference examples of the metal alloy comprise aluminum, aluminum alloy (the invention stated in claim 1, not a reference example), iron, iron alloy, steel, steel alloy, nickel, nickel-based alloy, copper, copper-based alloy, beryllium, beryllium-based alloy, cobalt, cobalt-based alloy, molybdenum, molybdenum-based alloy, complex concentrated alloys, titanium, titanium- alloy, tungsten, and tungsten-based alloy and any other alloy or combination thereof.

Examples of aluminum alloy comprise alloys in the 2XXX, 5XXX, 6XXX, 7XXX, or 8XXX series. In the method of the present disclosure, the metal alloy is an aluminum alloy. The aluminum alloy may be selected from the cast-grade aluminum alloys (e.g., A201). The aluminum alloys may comprise one or more of Al, Cu, Si, Mg and Zn. For example, the aluminum alloy may be selected from 2000 series aluminum alloys such as 2014, 2024, and/or 2099 aluminum alloy, or from 7000 series aluminum alloys, such as 7007, 7047, 7050, 7055, and/or 7150 aluminum alloy.

The at least one metal alloy may comprise more than one metal alloy, for example, a first metal alloy, a second metal alloy, a third metal alloy up to an n^{th} metal alloy. In the case of a plurality of metal alloys, the different metal alloys may be provided together or separately from one another. The plurality of metal alloys may comprise different metal alloys. In an example, a plurality of different metal alloys may be provided for the purpose of functionally grading articles formed via additive manufacturing. In an example, a plurality of different metal alloys are provided as feed stock in powder form to a powder feed system and processed according to pre-determined processing requirements for forming functionally graded articles. In a reference example, a plurality of different metal alloys are provided as feed stock in wire form to a wire feed system and processed according to pre-determined processing requirements for forming functionally graded articles.

The metal alloy may be provided in the form of a wire (reference example), powder ( the invention stated in claim 1) or liquid comprising the metal alloy (reference example), or a combination thereof (reference example). Metal alloy wire may be provided in any size or combination of sizes without limitation. In an example, metal alloy wire may be provided in up to 1/8-inch size. Powder may comprise metal alloy particles. The metal alloy particles may be provided in any size or combination of sizes, without limitation. For example, the raw metal alloy may be in powder form comprising particles in a size of from about 10 micrometers (microns) to about 250 micrometers (microns), such as from about 45 micrometers (microns) to about 105 micrometers (microns), including from about 10 micrometers (microns) to about 45 micrometers (microns). However, the raw metal alloy powder may be provided in sizes smaller than 10 micrometers (microns) or larger than 250 micrometers (microns). The metal alloy particles may be provided in any shape or combination of shapes, without limitation. For example, the raw metal alloy particles may be in powder form comprising particles of spherical, sponge, flake and the like.

As described above, addition of grain refiner(s) can improve the crack susceptibility of metal alloys. Accordingly, the addition of grain refiners can adapt conventional metal alloys for additive manufacturing processes. Because the resulting modified alloys can be formed *in situ,* this allows for rapid retrofitting of the conventional metal alloys on an as-needed basis.

The type and chemistry of the at least one grain refiner may vary. For example, the composition of the at least one grain refiner may include any one or more grain refiner that does not become part of a solid solution formed by heat treating of a matrix alloy. In a reference example, the at least one grain refiner may be selected from intermetallic and/or ceramic grain refiner, for example, grain refiner comprising one or more of titanium, aluminum, carbon, boron or mixtures thereof. Examples of grain refiner in the method of the invention stated in claim 1 are TiB₂, TiC, TiAl, AlB₂ and mixtures thereof. Other grain refiner comprising titanium may be used in a reference example depending on the desired properties of the final alloy.

In a reference example, grain refiner comprise up to about 5% by weight of the modified alloy. In the method of the invention stated in claim 1 the amount of grain refiner is in the range of between from 1.5 % to 3.5 % by weight of the modified alloy, including from about 2 % to about 3 % by weight of the modified alloy formed according to the methods described above. In a reference example, depending on the grain refiner used, the amount of grain refiner in the modified alloy is not less than 0.1% as such smaller amounts may not allow the grain refiner to serve the purpose of a nucleate in an additive manufacturing process for forming the modified alloy. In a reference example, the amount of grain refiner in the modified alloy does not exceed 5% by weight of the modified alloy as such larger amounts could cause deleterious effects in the modified alloy formed by additive manufacturing, such as from brittle/hard intermetallic phases to poor mechanical performance.

The at least one grain refiner is provided in powder form.

The modified alloy comprising grain refiners as described herein may have a greatly refined grain size relative to the grain size of the unmodified metal alloy. For example, the modified alloy may comprise an average grain size that is smaller, such as about an order of magnitude smaller, than the average grain size of the metal alloy.

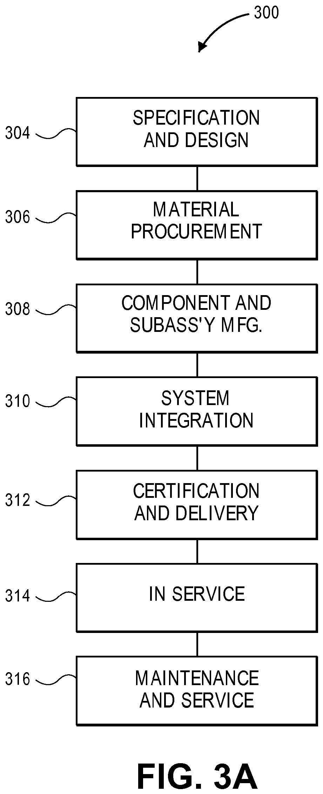

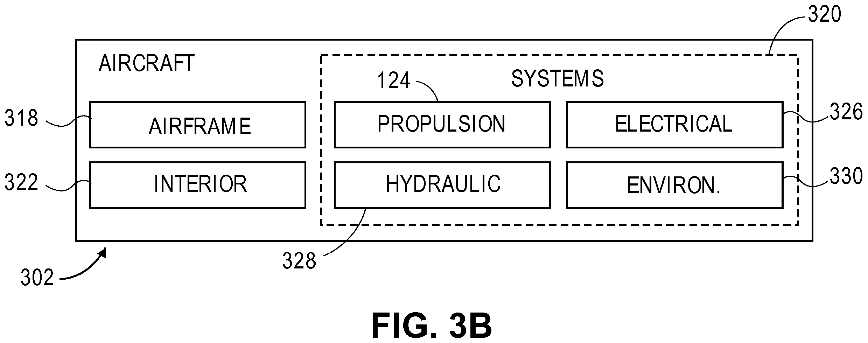

Examples of the disclosure may be described in the context of an aircraft manufacturing and service method 300 as shown in FIG. 3A and an aircraft 302 as shown in FIG. 3B. Turning to FIG 3A, during pre-production, exemplary method 300 may include specification and design 304 of the aircraft 302 and material procurement 306. During production, component and subassembly manufacturing 308 and system integration 310 of the aircraft 302 takes place. Thereafter, the aircraft 302 may go through certification and delivery 312 in order to be placed in service 314. While in service by a customer, the aircraft 302 may be scheduled for routine maintenance and service 316 (which may also include modification, reconfiguration, refurbishment, and so on).

Each of the processes of method 300 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 3B, the aircraft 302 which may be manufactured and serviced according to exemplary method 300 may include an airframe 318 with a plurality of systems 320 and an interior 322. Examples of high-level ones of systems 320 include one or more of a propulsion system 324, an electrical system 326, a hydraulic system 328, and an environmental system 330. Any number of other systems may be included. Although an aerospace example is shown, the principles of the disclosure may be applied to other industries, such as the automotive industry.

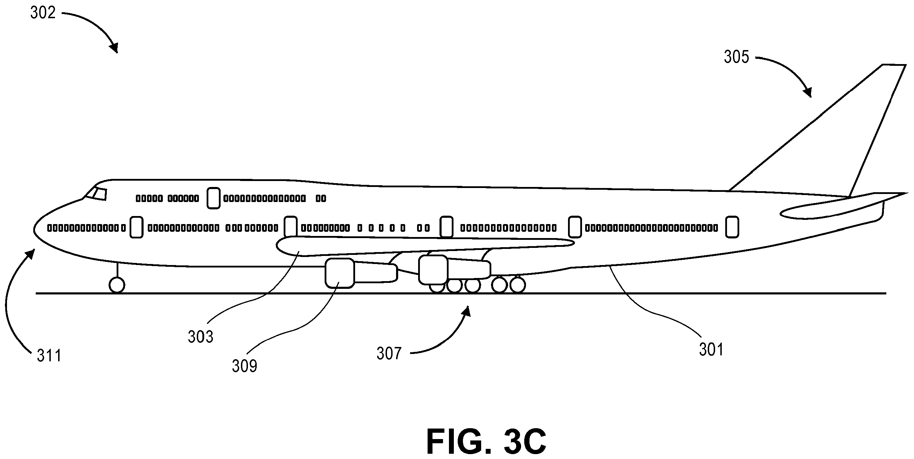

FIG. 3C is a side elevation view of an aircraft 302 comprising one or more metal alloy structures in accordance with another example of the disclosure. One of ordinary skill in the art will appreciate that metal alloys may be employed in a wide variety of components, including the fuselage, wings, empennage, body, and walls of the aircraft 302. In alternate examples, metal alloys may be used on other types of structures, vehicles, and platforms, such as motor vehicles, aircraft, maritime vessels, or spacecraft, or other suitable applications.

In this example, the aircraft 302 includes a fuselage 301 including wing assemblies 303, a tail assembly 305, and a landing assembly 307. The aircraft 302 further includes one or more propulsion units 309, a control system 311 (not visible), and a host of other systems and subsystems, such as those described above as high-level systems, that enable proper operation of the aircraft 302. In general, the various components and subsystems of the aircraft 302 may be of known construction and, for the sake of brevity, will not be described in detail herein.

Although the aircraft 302 shown in FIG. 3C is generally representative of a commercial passenger aircraft, including, for example, the 737, 747, 757, 767, 777, and 787 models commercially available from The Boeing Company of Chicago, Ill., the inventive modified alloy and methods disclosed herein may also be employed in the assembly of virtually any other types of aircraft. More specifically, the teachings of the present disclosure may be applied to the manufacture and assembly of other passenger aircraft, fighter aircraft, cargo aircraft, rotary aircraft, and any other types of manned or unmanned air vehicle.

Modified alloy(s) and method(s) for modifying alloy(s) described herein may be employed during any one or more of the stages of method 300. For example, components or subassemblies corresponding to component and subassembly manufacturing (block 308) may be fabricated or manufactured in a manner similar to components or subassemblies produced while aircraft 302 is in service (block 314). Also, one or more examples of the modified alloy(s), method(s) for modifying alloy(s), or combination thereof may be utilized during production stages (block 308 and block 310), for example, by substantially expediting assembly of or reducing the cost of aircraft 302. Similarly, one or more examples of the method(s) for modifying alloy(s) may be utilized, for example and without limitation, while aircraft 302 is in service (block 314) and/or during maintenance and service (block 316).

While the examples have been illustrated respect to one or more implementations, alterations and/or modifications may be made to the illustrated examples without departing from the scope of the appended claims. In addition, while a particular feature of the examples may have been disclosed with respect to only one of several implementations, such feature may be combined with one or more other features of the other implementations as may be desired and advantageous for any given or particular function. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It will be appreciated that structural components and/or processing stages may be added or existing structural components and/or processing stages may be removed or modified.

Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. Finally, "exemplary" indicates the description is used as an example, rather than implying that it is an ideal.

Furthermore, to the extent that the terms "including", "includes", "having", "has", "with", or variants thereof are used in either the detailed description and the claims, such terms are intended to be inclusive in a manner similar to the term "comprising." As used herein, the phrase "one or more of', for example, A, B, and C means any of the following: either A, B, or C alone; or combinations of two, such as A and B, B and C, and A and C; or combinations of three A, B and C.

Other examples will be apparent to those skilled in the art from consideration of the specification and practice of the descriptions disclosed herein.

## Claims

1. A method (100) for additive manufacturing a metal alloy, comprising:
providing a powder feedstock comprising at least one metal alloy (101) to a powder feed system, wherein the at least one metal alloy is an aluminum alloy;
providing a separate powder feedstock comprising at least one grain refiner (103) to a powder feed system, wherein the at least one grain refiner is one or more of TiB₂, TiC, TiAl, AlB₂ and mixtures thereof;
combining the feedstocks in pre-set proportions and exposing the feedstocks to an energy source to form a melt pool (105) comprising the at least one metal alloy and the at least one grain refiner; and
solidifying at least a portion of the melt pool to form a modified alloy (109) comprising an amount of the at least one grain refiner in the modified alloy in the range of between from 1.5 % to 3.5 % by weight of the modified alloy.

2. The method (100) of claim 1, wherein an amount of the at least one grain refiner in the modified alloy is in the range of between from 2 % to 3 % by weight of the modified alloy.

3. The method (100) of any preceding claim, wherein the at least one metal alloy comprises a cast grade aluminum alloy.

4. The method (100) of any preceding claim, further comprising depositing a portion of the melt pool in a predetermined pattern.

5. The method (100) of any preceding claim, wherein the forming of the melt pool comprises exposing at least a portion of the metal alloy to a beam of focused energy.

## Patentansprüche

1. Verfahren (100) zur additiven Herstellung einer Metalllegierung mit den Schritten:
Bereitstellen eines Pulver-Ausgangsmaterials, das mindestens eine Metalllegierung (101) umfasst, für ein Pulverzufuhrsystem, wobei die mindestens eine Metalllegierung eine Aluminiumlegierung ist;
Bereitstellen eines separaten Pulver-Ausgangsmaterials, das mindestens ein Kornfeinungsmittel (103) umfasst, für ein Pulverzufuhrsystem, wobei das mindestens eine Kornfeinungsmittel eines oder mehrere von TiB₂, TiC, TiAl, AlB₂ und Gemischen davon ist;
Kombinieren der Ausgangsmaterialien in voreingestellten Verhältnissen und Aussetzen der Ausgangsmaterialien einer Energiequelle, um ein Schmelzbad (105) zu bilden, das die mindestens eine Metalllegierung und das mindestens eine Kornfeinungsmittel umfasst; und
Verfestigen mindestens eines Teils des Schmelzbades, um eine modifizierte Legierung (109) zu bilden, die eine Menge des mindestens einen Kornfeinungsmittels in der modifizierten Legierung im Bereich zwischen 1,5 Gew.-% und 3,5 Gew.-% der modifizierten Legierung umfasst.

2. Verfahren (100) nach Anspruch 1, bei dem die Menge des mindestens einen Kornfeinungsmittels in der modifizierten Legierung im Bereich von 2 bis 3 Gew.-% der modifizierten Legierung liegt.

3. Verfahren (100) nach einem der vorhergehenden Ansprüche, bei dem die mindestens eine Metalllegierung eine Aluminiumgusslegierung umfasst.

4. Verfahren (100) nach einem der vorhergehenden Ansprüche, das ferner das Ablagern eines Teils des Schmelzbades in einem vorgegebenen Muster umfasst.

5. Verfahren (100) nach einem der vorhergehenden Ansprüche, bei dem das Bilden des Schmelzbades das Aussetzen mindestens eines Teils der Metalllegierung einem Strahl fokussierter Energie umfasst.

## Revendications

1. Procédé (100) pour la fabrication additive d'un alliage métallique, comprenant les étapes consistant à :
fournir une matière première en poudre comprenant au moins un alliage métallique (101) à un système d'alimentation de poudre, dans lequel le au moins un alliage métallique est un alliage d'aluminium ;
fournir une matière première en poudre séparée comprenant au moins un affineur de grains (103) à un système d'alimentation de poudre, dans lequel le au moins un affineur de grains est un ou plusieurs parmi TiB₂, TiC, TiAl, AlB₂ et des mélanges de ceux-ci ;
combiner les matières premières dans des proportions préétablies et exposer les matières premières à une source d'énergie pour former une masse fondue (105) comprenant le au moins un alliage métallique et le au moins un affineur de grains ; et
solidifier au moins une partie de la masse fondue pour former un alliage modifié (109) comprenant une quantité du au moins un affineur de grains dans l'alliage modifié dans la plage comprise entre 1,5 % et 3,5 % en poids de l'alliage modifié.

2. Procédé (100) selon la revendication 1, dans lequel une quantité du au moins un affineur de grains dans l'alliage modifié est dans la plage entre 2 % et 3 % en poids de l'alliage modifié.

3. Procédé (100) selon l'une quelconque des revendications précédentes, dans lequel le au moins un alliage métallique comprend un alliage d'aluminium de qualité de coulée.

4. Procédé (100) selon l'une quelconque des revendications précédentes, comprenant en outre le dépôt d'une partie de la masse fondue selon un motif prédéterminé.

5. Procédé (100) selon l'une quelconque des revendications précédentes, dans lequel la formation de la masse fondue comprend l'exposition d'au moins une partie de l'alliage métallique à un faisceau d'énergie focalisée.
